# EUROPEAN PATENT APPLICATION

(11) **EP 4 687 064 A1**
(43) Date of publication of application: **04.02.2026**
(21) Application number: 24191632.9
(22) Date of filing: 30.07.2024
(51) Int. Cl.: G06F 40/216, G06F 40/30, G06F 40/35, G06T 11/60

(54) **IDENTIFICATION OF AN ISSUE IN A TECHNICAL SYSTEM**

(71) Applicant: Siemens Aktiengesellschaft, 80333 München (DE)
(72) Inventor: Mayer, Hermann Georg, 83209 Prien am Chiemsee (DE); Wizenfeld, Gur, 5330612 Givatayim (IL)
(74) Representative: Siemens Patent Attorneys

(57) **Abstract**

The invention relates a Computer-implemented method for the identification of an issue in a technical system with the steps:
a) entry as a first information a description of the issue in non-formal language (12), and
b) entry as a second information at least one picture, photo, or video of at least a presumably affected part of the technical system (11),
c) analysis of the second information (20), and amending context of the technical system,
d) generating output in technical unambiguous language (23) by a LLM (10),
e) using output for evaluation of the to be identified issue (30, 40),
f) generation of at least one possible solution for issue in technical language (41) and
g) entry of possible solution and conversion by the LLM (10) generating an output (50).

## Description

Online communication on technical assets (like with the customer service) is often faced with failure descriptions, that are hard to trace back to a root cause of the observed and reported behavior. This is due to several factors:
a. Describing features of technical objects in a 3D environment is often incomplete and susceptible to ambiguities - particularly if features are not accessible by conventional photography.
b. On-site employees might not have the necessary technical skills to fully understand and describe the issue.
c. Natural language itself is ambiguous and not adequate for giving a complete description of an observed failure / issue.
d. The Language used for conversation might be different from language in technical documentation and manuals (e. g., English manual - Spanish spoken on site).

This often results into a lengthy process of clarifications or even in unnecessarily deploying service staff on site to resolve remaining doubts on the problem statement.

As systems become more complex, this problem occurs now in all areas of life. However, immediate and accurate technical support is particularly relevant in the industrial environment. Machine downtimes due to malfunction or incorrect operation can lead to loss of production (e.g., due to low quality of products) or, in the worst case, even to major damage to the technical equipment.

With state-of-the-art technology it is often possible to support the service request by evaluation of pictures or videos. However, taking and annotating those pictures is tedious and often the pictures not clear enough to focus on the actual problem, for example, the causative disturbing element is concealed by other components, or the cause of the disturbance is at a different location than assumed. Video calls might suffer from bad image and sound quality and unstable image acquisition. In addition, many features or failures are not accessible by cameras.

Novel approaches to provide online services in the industrial Metaverse (e.g., by showing technical features in digital twins and having conversations between avatars) are not very mature yet. Also, there are additional technical challenges like weak (or even no) internet connection on remote sites and missing access to corresponding devices (like smart glasses or object tracking)

It is the task of the claimed invention to improve the described situation and assist technical support with identifying problems on technical systems on a remote site.

This problem is solved by a computer-implemented method according to the features of claim 1. This problem is further solved by a computer program product according to the features of claim 13 and by a device according to claim 14.

Computer-implemented method for the identification of an issue in a technical system with the steps:
a) entry as a first information a description of the issue in non-formal language, and
b) entry as a second information at least one picture, photo, or video of at least a presumably affected part of the technical system (11),
c) analysis of the second information (20), and amending context of the technical system,
d) generating output in technical unambiguous language (23) by a LLM (10),
e) using output for evaluation of the to be identified issue (30, 40),
f) generation of at least one possible solution for issue in technical language (41) and
g) entry of possible solution and conversion by the LLM (10) generating an output (50).

The first information will be delivered in a non-formal language, meaning that e.g. a person not skilled in the art would describe what he or she observes, in colloquial language. No domain-specific knowledge is necessary, e.g. like what is the correct naming of a component in the technical description of the technical installation. So an axis could also be described as a rod or a pole.

Additional a second information is delivered to support the description, e.g. a picture of the axis that makes a strange noise, or a sound recording or even a video. There also it is not certain whether the problematic part is really shown in the photo.

So in a next step, the second information will be taken and amended, by the LLM. That LLM has to been trained with the information of the technical system, e. g. on handbooks of the system. It will then identify the depicted parts on the photograph and amend with the correct technical labels, e.g. naming the rod a connecting rod. It should be clear that the naming must be unambiguous, so that the corresponding part in the technical system can be identified. It is also possible that a number is used as a name or label, which is not understandable for a human.

The so generated output of the LLM will then be used to look up the issue in a database. In the database there might be collected any issues of the technical system that have been encountered so far. Further it could be using the information of technical handbooks again.

As a result a possible reason for the technical issue should be found and based on that information at least one proposal for a remedy of the so identified issue. This will be generated in a first step again in a technical correct language, which can be understood by a technical expert but not by a layman. Therefore in a last step this output is taken and translated back e.g. into colloquial language, containing instructions for action. Another possibility is the translation into a patch (if we are talking software), which then could be directly used in the technical system for patching the issue.

This method has the advantage, that even a person not skilled in the art can report an issue at a technical system and without interference of an expert in the field, at least the most probable causes for an issue can be handled, so that the expert needs only to review in the few cases where no remedy could be found by the so called first level support.

Further embodiments are described by the dependent claims.

The mapping of the received second information can for example handled by a knowledge graph. Knowledge graphs are often used to store interlinked descriptions of entities - objects, events, situations or abstract concepts - while also encoding the free-form semantics or relationships underlying these entities. A knowledge graph formally represents semantics by describing entities and their relationships. Knowledge graphs may make use of ontologies as a schema layer. By doing this, they allow logical inference for retrieving implicit knowledge rather than only allowing queries requesting explicit knowledge.

The generated output may comprise the conversion of the possible solution for issue in technical language into natural language, and as a consequence for example display it to a user, which then can try to execute the instructions at the technical system and give a feedback whether the generated output helped in eliminating the issue. Or else, another query must be sent. It is also possible, to collect this feedback and so improve the entries in the database.

The Output may be generated by the LLM that is trained directly from technical documentation without further pre-processing. As normally for every technical system there already exists plenty of documentation, handbooks and the like, this information is predestined to use it for the training of the LLM. So transmission errors can be avoided, for example by reports of other users that try to solve an issue but deliver not the correct remedy.

In an alternative solution, the generated output comprises the conversion into technical commands for directly patch of issue. Which of those would be preferable, depending on the kind of the technical system and the type of the issue.

The generation of proposed solutions is done by looking up a solution database. This is advantageous if the system is quite well established and a number of issues already have been collected and evaluated. With a fairly new system, it might be better to try to find a remedy of the issue directly in the handbooks or querying information available elsewhere, for example on the internet.

It is also imaginable, that further technical information is added to the second information, by using a 3D Model of the technical syste (also called a digital twin) of the technical system and searching for relevant context.

The Model might contain further information at least on:
- manufacturing steps, or
- human interaction (with the parts) or
- physical behavior of the parts.

The first information might be input description in written text or also in speech, which then might be transferred into writing. Depending on the kind of tools that are used it might be easier to dictate some key points than typing it, e.g. into a small mobile without a decent keyboard. On the other hand, it might be helpful to type in text, e.g. if in the surroundings of the technical system it is so loud that spoken text could not be understood easily.

This might for example case if the technical system is an industrial production line.

In the production line it is a common task to supervise the production. The method can also be used for Quality management of products, detecting and elimintating the reason for a defective product not meeting quality standards. In this case the technical issue lies not in the production line but in the product that is produced there. Also if the product does not meet the standards, there must be an issue that does not lie in the product but in the production line. It is of the essence that the products are manufactured flawlessly. Any defects show either that there is a problem with the plant itself or with the process running in the plant.

This idea is not limited to a plant as a technical system For example the technical system could also being a vehicle, in particular a train, an AGV or the like or a smart home..

The invention is further represented by the figures.

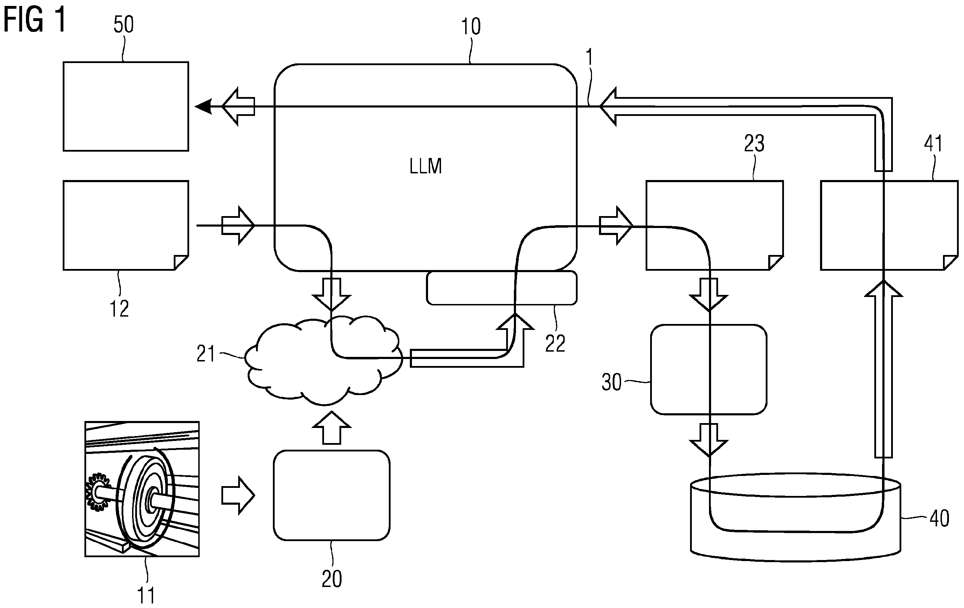

Figure 1 shows and overview of the proposed method and system including the data stream,
Figure 2 shows a flow chart of the relevant steps of the procedure,
Figure 3 shows an industrial production line and a digital twin of the scene,
Figure 4 shows a picture with additional information about the technical system.

The figures show an example in an industrial plant.

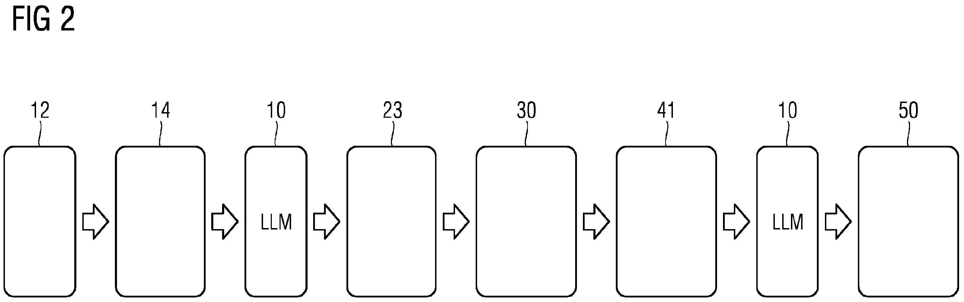

The flow chart in Figure 2 depicts the relevant steps of the claimed method, that assists users in getting solutions to a technical issue, which is formulated in non-formal or non-technical (meaning every-day) language, 12. The first step is to translate the user input into a technically concise (unambiguous) description of the underlying issue. This translation can be performed by a large language model, LLM, which is trained accordingly. Since LLMs require a huge set of training examples, it is crucial that data can be fed into the LLM directly from technical documentation without further pre-processing.

Adding this information might be done by fine-tuning a so-called foundation model, which was trained on natural (usually non-technical language) meaning changing the parameters of the underlying foundation model to guide the model to generate output that is optimized for the task or - as an alternative - using embeddings instead.

In order to connect both worlds in one single input (also known as the prompt of the LLM), the technical features and terms of the input should be added by analyzing additional information like images. Adding technical information to images requires several steps:
The first step is to build up a distinct knowledge graph from any technical object. One of the main purposes for that is naming entities in an unambiguous way. For example, the same piece of metal might be named "bar", "rod", "shaft", "staff" or "spindle",... depending on the user and use case. For technical descriptions it is quite important to use one consistent naming whenever the same part is referenced. This also applies to relations between entities like "A connects to B", "A is attached to B", "A is welded onto B", "A is fixed to B" ... just to name some of the options.

Taking all entities and connections of a technical object will result in the knowledge graph, which will be used for downstream tasks. Setting up a knowledge graph for a technical object could be challenging due to the amount of needed data, if it is not taken into consideration from the very beginning in the design. However, by including the construction of a knowledge graph with unambiguous naming convention already in the engineering phase will give good results with no additional effort. For example, designing a part in Siemens NX will automatically result in a scene description, which can be taken 1:1 as a structure for the knowledge graph if done properly. Also, adding names to the created entities can be done with no extra effort along the engineering process.

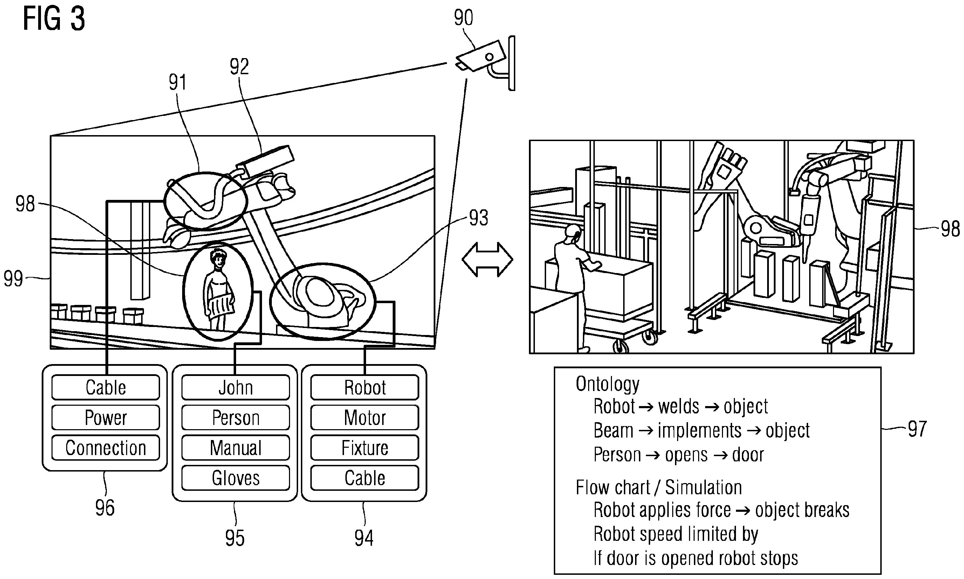

The result will be a model as depicted in figure 3 for an industrial production line.

On the left side, a picture 99 of an industrial production site is suggested. In the middle of the picture, a person 98 is identified near a robot 93 with a tool 91 mounted on the top.

An identification of the situation on the picture gives more details about the situation:
The robot 93 has the following features 94, for explanatory purposes only, the list is of course not exhaustive:
- Robot
- Motor
- Fixture
- Cable

The P depicted person 98 was identified (e.g. wearing Gloves and holding something in his hands which could also be a tablet or any other control device.
- John
- Person
- Manual
- Gloves

The tool 91 at the end of the robot arm was specified in
- Cable
- Power
- Connection.

On the right side of the Figure 3, there is an example how a picture could be described not only by parts but also by relations between parts, e.g. in USD (Universal Scene Description).

### Ontology 97

Robot → welds →object
Beam → implements →object
Person → opens →door

### Flow chart / Simulation:

Robot applies force --*object breaks
Robot speed limited by ...
If door is openend, Robot stops

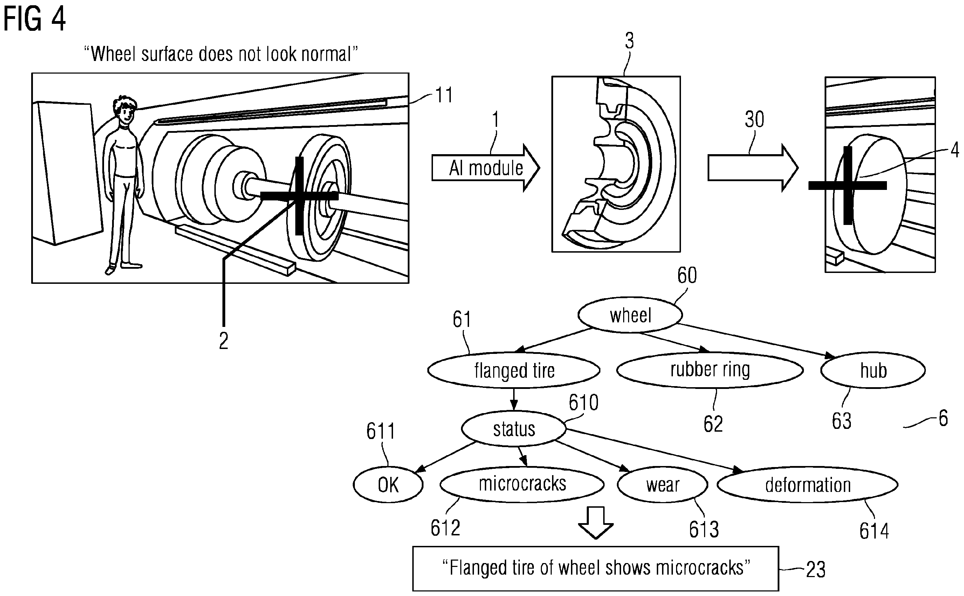

In figure 4, a knowledge graph representing a technical system is depicted.

A 3D model representing the real installation, like a digital twin, consists of 3D parts, which are organized in (and referenced by) a knowledge graph, which is based on an ontology defined in a formal unambiguous language. Depending on the used modelling tool, also abstract processes (like manufacturing steps, human interaction or physical behavior) can be included into the knowledge graph. This model will be taken as prerequisite for further considerations.

Once the model is established, it can be used to assist the automated detection of features in images taken from the technical system, e.g. a real factory environment:
the image on the left side shows a robot operated by a human worker. The image recognition can be selectively trained from artificial images generated from the 3D model (right side). This (already existing) technology will help to identify instances of the entities in the real scene. With that their approximate position in the image will be determined and the occurrences will be linked to the knowledge graph established above (left side). The main advantage of this coupling is that hidden elements are positionally referenced as well (e.g., the gear parts of the robot's motor).

Now the user can interact with a large language model (LLM) to formulate a documentation of features or failures:
Without any additional knowledge on technical terms, the issue can be formulated in simple natural language. In the example, the input for the issue tracking system can be made by a mobile phone, which records the description of the user and adds a picture or video of the relevant entities.

As a next step, the system searches for the relevant context of the description. In some cases, the context might be already clear, e.g., in the context of a train wheel, from opening the app for wheel inspection. In general, the context could be derived from analyzing the speech and/or the image or video taken by the recording device. For getting the right context from speech, only, LLMs can be trained to choose the right category depending on the natural language content (by clustering):
In the example of figure 4, the person has the impression, that "Wheel surface does not look normal" → context in this example is a train wheel.

In some cases, the spoken language will not be distinct enough to identify the right context for the task. Here, pictures will help to find the right context. The general assumption is that the device with the application is capable of taking pictures with a camera. Optionally, the user could restrict the search area by marking, 2, relevant parts or identifying points of interest. Given this information, the system tries to find the best match 3 of 2D view of the 3D model of a technical object with its counterpart in the real world. Once this was successfully done, the relevant context in form of a knowledge graph, 6, can be loaded from the data base.

In the given example of the train wheel, it is known that the wheel 60 consists of a flanged tire 61, a rubber ring 62 and a hub 63. The flanged tire 61 has now a status, which could be "OK", 611, or not OK, meaning microcracks, 612 wear 613 or deformation 614.

This information about the wheel, its components, materials, connections, possible conditions, etc. is displayed in the Knowledge Graph.

By taking the right context, the knowledge graph of interdependent technical terms can be retrieved and provided to the LLM (e.g., by prompt engineering). With the help of this contextual information, the LLM can translate the description of the issue into a formulation, which utilizes the right technical terms: "Flanged tire of wheel shows microcracks". This is done by translating the formal description of a knowledge graph (e.g., in RDF) into a natural language, which can be used as input to the LLM. For the example above this translation might read as follows:
The wheel of the train in the example consists of a hub, a rubber ring, and a flanged tire. The flanged tire is attached to the rubber ring, which sits on the hub (*note: not all relations are depicted above*). The flange tire might be OK or in different failure states: microcracks (reference to example picture), wear (reference to example picture) and deformations (spread sheet with measurements).

This text can now be put to the context window and prompt of an LLM, which will be advised to translate the descriptive text into these formal technical terms.

Given this technical representation of an issue, it is now easier to find the right solution to an issue. In the example the solution will be looked up in a dababase that stored all known former issues of the technical systems and the corresponding solutions to this issues, if it was previously resolved and stored by others. By a semantic search in the Database, which optionally can be supported by vector embeddings.

After looking up the solution it might include many technical terms, which the end user of the system might not understand. Again, the LLM can help to translate these instructions into a more verbose easy-to-understand language or even translate it into a different natural language (e.g., technical description → simple English → simple German). So finally, a loop can be closed, to have an informal conversation with the chat system, which is internally non-the-less based on proper technical formulation for later retrieval.

While many of the technologies compiled in this system are already existent, the following features are yet unpublished (up to our knowledge): the parts depicted in yellow (see below) show the relevant new steps for connecting LLMs with knowledge graphs in a way that language in issue and feature description can be harmonized. As described above, the input of the user (text, optionally images) is forwarded to AI models, which are finetuned for categorizing the user's input. With the help of this categorization, the system can pick the right knowledge graph for further processing. The relevant step is now to turn the information of the knowledge graph into a textual description, which can be understood by the LLM (taken as prompt in the context window). For making it as easy as possible, the knowledge graph must be designed in a way to support processing itself by a "knowledge graph parser". Therefore, a proper nomenclature should be introduced, and the description of entities should come with possible synonyms to enable mapping to the non-technical input.

## Claims

1. Computer-implemented method for the identification of an issue in a technical system with the steps:
h) entry as a first information a description of the issue in non-formal language (12), and
i) entry as a second information at least one picture, photo, or video of at least a presumably affected part of the technical system (11),
j) analysis of the second information (20), and amending context of the technical system,
k) generating output in technical unambiguous language (23) by a LLM (10),
l) using output for evaluation of the to be identified issue (30, 40),
m) generation of at least one possible solution for issue in technical language (41) and
n) entry of possible solution and conversion by the LLM (10) generating an output (50).

2. Computer-implemented method for the identification of an issue in a technical system according to claim 1, wherein:
Step b) contains mapping the received second information (14) on a knowledge graph (6).

3. Computer-implemented method for the identification of an issue in a technical system according to claim 1 or 2, wherein:
the generated output (50) comprises the conversion of the possible solution for issue in technical language into natural language and display.

4. Computer-implemented method for the identification of an issue in a technical system according to claim 1 or 2, wherein:
the generated output (50) comprises the conversion into technical commands for patch of issue.

5. Computer-implemented method for the identification of an issue in a technical system according to one of the previous claims, **characterized in**
the generation of proposed solutions according to step f) is done by looking up a solution database (40).

6. Computer-implemented method for the identification of an issue in a technical system according to one of the previous claims, **characterized in**
adding further technical information to the picture or video, in step c) by Using a 3D Model (digital twin) of the technical system and searching for relevant context.

7. Computer-implemented method for the identification of an issue in a technical system according to claim 5, **characterized in**
**That** the Model contains further information at least on:
- manufacturing steps, or
- human interaction or
- physical behavior

8. Computer-implemented method for the identification of an issue in a technical system according to one of the previous claims, **characterized in that**
The Output is generated by the LLM (10) and the LLM is trained directly from technical documentation without further pre-processing.

9. Computer-implemented method for the identification of an issue in a technical system according to one of the previous claims, **characterized in that**
The first information of step a) is input description in written text or speech.

10. Computer-implemented method for the identification of an issue in a technical system according to one of the previous claims, **characterized in**
the technical system being an industrial production line.

11. Computer-implemented method for the identification of an issue in a technical system according to claim 10, **characterized in**
The method is used for Quality management of products, detecting and elimintating the reason for a defective product not meeting quality standards.

12. Computer-implemented method for the identification of an issue in a technical system according to one of the previous claims 1 to 9, **characterized in**
The technical system being a vehicle, in particular a train.

13. Computer Program Product, for carrying out the steps of the method according to the features of one of the preceding claims.

14. System for supporting the identification of an issue in a technical system with:
With a receiver for receiving a first information a description of the issue in non-formal language (12),
A receiver for receiving a second information at least one picture, photo, or video of at least a presumably affected part of the technical system (11),
A processor for processing an LLM (10) for analysis of the second information (20), and
amending context of the technical system to the information,
and for generation of an output in a technical unambiguous language (23), that is for use of a search in a solution database (40) for Evaluation of the issue (30, 40) using the generated output (23),
and for generation of at least one possible solution for issue in technical language (41) and
entry of possible solution and
the processor conversion by LLM (10)
generating an output (50).

15. System for the identification of an issue in a technical system according to claim 14, wherein:
the received second information (11) is mapped on a knowledge graph (6).

16. System for the identification of an issue in a technical system according to claim 14 or 15, wherein:
the generated output (50) comprises the conversion of the possible solution for issue in technical language into natural language and display.

17. System for the identification of an issue in a technical system according to claim 14 or 15, wherein:
the generated output (50) comprises the conversion into technical commands for patch of issue which is then applied to the technical system for remedy of the issue.

18. System for the identification of an issue in a technical system according to one of the previous claims 14 to 17, **characterized in**
a solution database (40) for looking up the generation of proposed remedy for the identified issue.

19. System for the identification of an issue in a technical system according to one of the previous claims 14 to 18, **characterized in**
adding further technical information to the picture or video, in step c) by Using a 3D Model (digital twin) of the technical system and searching for relevant context.

20. System for the identification of an issue in a technical system according to claim 18, **characterized in**
the Model containing further information at least on:
- manufacturing steps, or
- human interaction or
- physical behavior

21. System for the identification of an issue in a technical system according to one of the previous claims 14 to 20, **characterized in that**
the LLM that generates the output is trained directly from technical documentation without further pre-processing.

22. System for the identification of an issue in a technical system according to one of the previous claims 14 to 21, **characterized in that**
The first information of step a) is input description in written text or speech.

23. System for the identification of an issue in a technical system according to one of the previous claims 14 to 22, **characterized in**
the technical system being an industrial production line.

24. System for the identification of an issue in a technical system according to claim 23, **characterized in**
The Output being used for Quality management of products and detecting and removing the reason for a defective product not meeting quality standards.

25. System for the identification of an issue in a technical system according to one of the previous claims 14 to 22, **characterized in**
The technical system being a vehicle, in particular a train.
